# EUROPEAN PATENT APPLICATION

(11) **EP 2 586 684 A1**
(43) Date of publication of application: **01.05.2013**
(21) Application number: 12190870.1
(22) Date of filing: 31.10.2012
(51) Int. Cl.: B62J 7/00, B62J 9/00

(54) **Engaging element for fastening a holder to a cycle luggage carrier**

(30) Priority: 31.10.2011 NL 2007674
(71) Applicant: 1T1 B.V., 1185 MX Amstelveen (NL)
(72) Inventor: van Bemmelen, Jeroen, 1185 MX Amstelveen (NL); Wassink Smit, Natha, 1011 CH Amsterdam (NL)
(74) Representative: Clarkson, Paul Magnus

(57) **Abstract**

Engaging element (10) for a panier (13) and for fastening to a side of a connecting element (40) with a base (42) on a bicycle luggage carrier (6). The engaging element (10) has a main part (14) with a receiver space (16) for a ledge (45) along a length direction X of the base (42). The engaging element (10) has two locking bodies (18) which are linearly movable in opposition to each other in the length direction X and can be operated via sides of the panier (13) between a locked position in which the engaging element (10) fastened to the base (42) is linearly immovable at least in a transverse direction Y in relation to the base (42) and a released position in which the fastened engaging element (10) is movable in relation to the base (42).

## Description

The invention relates to an engaging element for fastening a holder to a side of a horizontal plane above a cycle wheel, and to a holder provided with an engaging element. The invention also relates to a connecting element for fastening a holder to a side of a cycle wheel, and to a cycle provided with a connecting element. The invention furthermore relates to an assembly of such a connecting element and an engaging element and/or a holder, and to a cycle provided with such an assembly.

Patent document US 5979023 discloses an engaging element for fastening a holder to a bicycle luggage carrier. According to one of the embodiments shown, the engaging element comprises an S-shaped main part, the first curved part of which can be fastened directly to the luggage carrier of a cycle. A second curved part of the S-shaped body engages into a carrying edge at the holder. The engaging element has a locking body which is rotatable in relation to the S-shaped body via a hand control from above, and with which the fastened S-shaped body can be secured on the bicycle luggage carrier. In the embodiments shown two such S-shaped engaging elements are used to fasten a single holder in suspended fashion on a side of the bicycle luggage carrier. As shown, two S-shaped bodies can be joined together into a combined engaging element by the addition of a connecting handle which is provided with a control for the locking bodies.

One disadvantage of both the engaging element and the combined engaging element is that during use the top of the bicycle luggage carrier must remain clear for controlling the locking bodies.

One object of the invention is to realise an engaging element and an associated connecting element with which the top of a plane above a cycle wheel, such as a luggage carrier, remains usable for carrying other objects or possibly persons.

This object is achieved according to an aspect of the invention by providing an engaging element for a holder, arranged for fastening to a longitudinal side of a substantially horizontal plane above a wheel of a cycle, for example to a bicycle luggage carrier, characterised in that the engaging element comprises a main part with a receiver space for a ledge along a length direction of a base in the horizontal plane and that the engaging element comprises two locking bodies which are linearly movable in relation to the main part and in opposition to each other in the length direction, and which can be operated along sides of the engaging element between a locked position in which the engaging element fastened to the base is linearly immovable at least in a transverse direction in relation to the base and a released position in which the fastened engaging element is linearly movable in relation to the base.

The base can be fastened in the horizontal plane of a cycle, for example above a cycle wheel (such as on a bicycle luggage carrier), and along the length direction has a ledge to which the engaging element can be fastened. When the engaging element is fastened to the base, the receiver space will surround the ledge and under the effect of gravity the engaging element rests on the top of the ledge. The engaging element can be fastened or form part of a holder so that the holder can be fastened to the longitudinal side of the horizontal plane above the wheel, i.e. on the top of the wheel. The holder can for example be a panier or a briefcase, shoulder bag or holder for other objects. The two locking bodies with longitudinal locking and release function form part of a coupling mechanism operated by exerting a force along the length direction and via sides of the engaging element by the user. By means of this coupling mechanism the locking or release of the engaging element can be achieved via the sides of the holder without access to or exertion of a force being required on the engaging element in the transverse direction or from above. One advantage of this control and exertion of force in the length direction is that it uses the stability of the cycle in the length direction, which is not the case when force is exerted in the transverse direction. In addition by exerting opposite forces on the two locking elements, the resulting force transferred to the cycle will be minimum. The surface at the top therefore remains fully usable and any further holders present (such as a box) placed on the top of the base do not hinder the operation of the engaging element from the sides of the holder. Also a control mechanism operating essentially in the length direction can contribute to the engaging element being able to be manufactured with small thickness in the transverse direction, which minimises the protrusion of the holder in the transverse direction.

According to an embodiment the locking bodies are provided with spring mechanisms for forcing the locking bodies into the locked position.

By providing the locking bodies with spring mechanisms, these will automatically remain in the locked position as long as no external force is exerted, for example by manual operation. An engaging element which is fastened to the base therefore remains locked to the base and can only be removed from the base under desired conditions, for example by an exertion of force via a control mechanism. Unlocking the locking elements requires a force which is greater than the total force exerted by the spring mechanisms.

According to an embodiment the engaging element is provided with a connecting strap for fastening along at least one peripheral part of the holder, wherein the connecting strap is coupled with the locking body and is arranged to move the locking body in the length direction in relation to the main part.

The connecting straps form a sideways operably means for exerting force to release the locking bodies. These connecting straps can be fastened around part of the perimeter of the holder, for example a panier. The connecting straps are mechanically connected with the locking bodies so that by exertion of tensile force on the connecting straps along the length direction, the locking bodies are displaced along the same length direction. Preferably this tensile force along the length direction moves the locking bodies into the released position. In an alternative embodiment a tensile force acting on the connecting strap can, as well or instead of this, cause the locking of the locking body. As the connecting straps are accessible for the user from the side of the holder, the user can easily move the locking bodies into the released position even if one or more access restricting objects (such as a box) are placed on the top of the base. The connecting straps can be mounted along part of or even along the entire holder periphery and for example form a weight-spreading connection between the engaging element and the holder. Also separate handles for the user can be mounted on the connecting straps for easier operation by the exertion of force.

According to an embodiment the locking body is movable in the transverse direction in relation to the main part when fastening the engaging element to the base.

Fastening the engaging element with the holder to the base usually requires displacement of the holder in the transverse direction towards the base. Because of the mobility of the locking body in the transverse direction in relation to the main part of the engaging element, on their positioning the locking bodies can temporarily be held in the released position. Preferably the mobility of the locking body in the transverse direction and in particular towards the locked position is at least partly driven by the abovedescribed or another spring mechanism. Thus a force of sufficient size directed transversely onto the cycle is exerted on the engaging element during positioning and coupling with the base, temporarily forcing the locking bodies into the released position, whereupon the engaging element is automatically fastened to the base under the spring force.

According to an embodiment the receiver space on a top is provided with a support region for supporting the engaging element at a support edge of the ledge, wherein the at least one locking body is located on an underside of the receiver space and is provided with a stop region which lies one ledge height lower than the support region and is arranged to engage the underside of the ledge.

The term "ledge height" means the distance between a top region and a bottom region of the upright edge. The support region at the top of the receiver space in the main part and the stop region of the locking body cooperate such that the engaging element in the locked position encloses the ledge both on the underside and on the top support edge. Because the stop region of the locking body in the locked position lies below the support region of the receiver space at a distance equal to the ledge height, the ledge can be forced into and held in the receiver space by the upward spring action of the locking body.

According to an embodiment the receiver space at the top is provided with a downwardly protruding part intended for engaging a hinge recess in the support edge of the connecting element and located along the length direction.

The hinge recess in the support edge of the ledge and the downwardly protruding part at the top of the receiver space engage each other during fastening of the engaging element to the base. The hinge recess and the downwardly protruding part have facing stop regions so that on fastening, a linear displacement of the engaging element and holder in relation to the base in the transverse direction becomes impossible. The term "hinge recess" means that a part of the upright edge close to the recess has a maximum diameter perpendicular to the length direction which is smaller than the characteristic diameter of the receiver space, for example the distance between an inside of the downwardly protruding part and a rear wall of the receiver space. Because of the hinge recess in the base and a complementary shaping of the holder, the engaging element fastened to the base even in the locked position is pivotable along a predefined limited angle in a vertical transverse plane so that a (possibly restricted) rotational movement along a virtual rotation axis in the length direction remains possible. This gives the fastened holder a desired freedom of rotational movement during use of the cycle, for example when the cycle is leaning. The part of the upright ledge edge, for example near the stop region of the locking body, can be designed as an angular ledge profile with a sloping surface or rounded shape or as a cylinder with a diameter which at most is the same size as the characteristic diameter of the receiver space (for example the distance between the support region and the stop region). According to an embodiment the receiver space and the ledge in the length direction have almost equal lengths and the locking bodies lie on the length ends of the receiver space.

The similarity of shape of the engaging element and the ledge in the length direction ensures a form-fit connection in that direction, so that in that direction almost no linear displacement is possible of the fastened engaging element (and holder) in relation to the base (and the cycle). By providing the locking bodies at the length ends of the receiver space, the deviation of the locking bodies on transition between the locked position and released position will remain relatively small so that the engaging element in the length direction need only be slightly wider than the length of the ledge. According to a further embodiment the receiver space of the engaging element can be formed complementary to the shape of the ledge, which results in a form-fit connection between the connecting element and the engaging element.

According to an embodiment the engaging element is provided with a locking mechanism with an upright locking edge for enclosing the downward edge part of the ledge in the secured position.

The locking mechanism, for example a lock with a cam profile, can be mounted for example in a middle part of the receiver space. In a secured position wherein the ledge of the connecting element is accommodated in the receiver space of the engaging element, the locking mechanism clamps the downwardly protruding edge part of the ledge by means of the upright locking edge and thus prevents the engaging element (possibly with holder) from being removed from the ledge linearly along the height direction or via a pivot movement in the transverse plane. In order to prevent displacement of the engaging element in the secured position along the height direction, the locking mechanism at a top of the lock can be provided with a flat lock stop region which in the secured position joins a lower edge of the downward edge part of the ledge. Thus in the secured position and for a rotated engaging element, the downward edge part is enclosed by the upright locking edge and the lock stop region along the transverse direction and height direction respectively. Furthermore the lock can be provided for example with a cylinder which can be turned with a separate key, whereby the locking edge can be turned in and out of the receiver space. With the lock in the secured position, the user can counter undesirable removal of the panier (for example on theft).

According to another aspect and in accordance with the effects described above, the invention provides a holder with such an engaging element. In an embodiment the holder is formed as a panier which is provided with the engaging element on a side.

According to yet another aspect the invention provides a connecting element comprising complementary engaging elements, each of which is formed cooperating with an engaging element on a holder such that the holder can be fastened to a side of a wheel of a cycle, characterised in that the connecting element comprises a base which can be fastened in a substantially horizontal plane of the cycle, for example above the wheel (such as on the top of a bicycle luggage carrier), wherein the complementary engaging elements are formed as ledges extending along a length direction and are mounted on two longitudinal sides of the base.

The connecting element offers the advantages described above for fastening to the top of a luggage carrier or in a plane above a cycle wheel, wherein the ledges function as complementary engaging elements which protrude on both sides of the wheel and assume a fixed orientation in relation to the cycle. Movement of the base in relation to the cycle, namely in the length direction, is thus excluded. The laterally protruding ledges form ideal engaging regions for the engaging elements described above.

According to an embodiment each ledge comprises a support edge which transforms into an upright edge along a height direction, wherein the support edge comprises at least one hinge recess for receiving a downwardly protruding part of the engaging element.

The upright edge along the height direction offers a groove oriented along the height direction which is formed such that the engaging element and/or the holder can only be detached from the base after a substantially linear displacement along the height direction. The cooperation between the hinge recess and downwardly protruding part results in the rotational freedom described above for the holder.

According to an embodiment the connecting element comprises a carrying surface located at the top of the base which is arranged to support persons or objects in the substantially horizontal plane above the wheel.

According to an embodiment the base comprises further complementary engaging elements which are formed cooperating with further engaging elements of a further holder such that the further holder can be fastened to a top of the base, whereby the base comprises at least two further locking bodies for engaging at least two holder recesses with a stop surface in the further holder, wherein the further locking bodies are movable between a further released position in which the further holder is movable in the length direction in relation to the base and a further locked position in which each further locking body touches the stop surface and the further holder is immovable in relation to the base.

The further complementary engaging elements in the connecting element cooperate with the further engaging elements in the further holder, and the further locking bodies on top of the base drop into the holder recesses. The further holder can be a folding box or be designed for example as a rigid box, a basket, case or cool box, a child seat, a sports bag, golf bag or golf trolley, or a buggy carrier. The further holder is freely movable in the length direction of the cycle over the base as long as the further locking bodies are in the further released position. This horizontal movement of the further holder in the length direction of the cycle during positioning on the connecting element makes optimum use of the stability of the cycle in the length direction and therefore requires minimum coordination and effort by the user. Only after the further locking bodies have been moved into the further locked position, which can take place for example via an automatic mechanism or by pressing a button by the user, is the further holder fastened in relation to the base. This facilitates the fastening of the further holder to the cycle luggage carrier since the user can use both hands to move the further holder or can keep one hand free for lateral stability of the cycle.

According to an embodiment, the connecting element is provided with a further spring mechanism for forcing the further locking bodies into the further locked position.

The further locking bodies will automatically spring into the further locked position via the further spring mechanism as soon as the further holder and connecting element are correctly positioned in relation to each other. Because of the further spring mechanism, the further connecting element preferably assumes the further locked position and it becomes unlikely that the further connecting element will assume a position between the further released position and the locked position. By providing means for fastening the further locking bodies temporarily in the further released position, a so-called bi-stable fastening mechanism is provided which, depending on the mutual positions of the further holder and the base, can switch between a further locked position and a further released position. Due to the further spring mechanism forcing the further locking bodies into the further locked position, the user need not perform any further action when locking the further holder on top of the base, and keeps one hand free to be able to stabilise the cycle.

According to an embodiment, the connecting element is provided with a control mechanism with a control body which is mounted movable in relation to the base and arranged for positioning the further locking bodies into the further released position.

The control mechanism with the control body movable in relation to the base offers the user the possibility of setting the further locking bodies in the further released position at any desired moment. Subsequent removal of the further holder from the top of the base is achieved by merely an opposite movement of the further holder over the base in the length direction. Preferably the control body is accessible for the user both in the absence and presence of the further holder on top of the base.

According to an embodiment the further locking bodies in the further locked position can be extended in the transverse direction up to a further secured position such that the further locking bodies engage in depressions in the holder recesses, if the further locking body is fastened on top of the base.

Also the further locking bodies can be arranged to engage engaging points in the base of the connecting element in the further secured position. The extension and engaging of the further locking bodies in the depressions of the further holder and possibly on the base ensures a rigid connection between the further holder and the base. In the resulting further secured position, the further locking bodies are no longer movable between the further released position and the further locked position, and the further holder is secured.

According to an embodiment the control mechanism is provided with a further locking mechanism for fastening the further locking bodies in at least one of the further released position, the further locked position and the further secured position.

The further locking mechanism offers the user the possibility of setting the position of the abovementioned bi-stable fastening mechanism as desired. Also the further locking mechanism can be operated for example by means of the key (also used to lock the engaging element) to fasten the further locking bodies in the further secured position so as to counter an undesirable transition between the further released position and the further locked position. As a result, during cycling and holder transport, the further holder cannot slip off undesirably in the length direction of the connecting element, which improves safety.

According to yet another aspect and in accordance with the effects described above, the invention provides an assembly of a connecting element as described above, an engaging element as described above and/or a holder as described above.

According to an embodiment the assembly comprises a further holder arranged for fastening on top of the base, which can be fastened in the horizontal plane of the cycle, wherein the further holder comprises further engaging elements which are formed cooperating with further complementary engaging elements on the base, wherein the further holder comprises at least two holder recesses with a stop surface for engaging on the two further locking bodies, such that the further holder is movable in the length direction in relation to the base and such that each further locking body in the further locked position touches the stop surface and the further holder is immovable in relation to the base.

In addition, the invention provides according to other aspects for a cycle provided with a connecting element or assembly as described above.

It will be clear that the various aspects described in the present patent application can be combined and each separately can be considered for a divisional patent application.

Embodiment examples of the invention will be described below exclusively as examples with reference to the accompanying schematic drawings, wherein corresponding parts are indicated by corresponding reference symbols.
Fig. 1 shows embodiments of a connecting element, of a holder provided with an engaging element and of a further holder;
Fig. 2a shows a perspective view of an engaging element according to an embodiment;
Fig. 2b shows a perspective view of a holder provided with an engaging element according to an embodiment;
Figs. 3a - 3c show cross sections of embodiments of an engaging element;
Figs. 4a and 4b show two cross sections of a rotated engaging element according to an embodiment.

The drawings are intended solely for illustrative purposes and should not be used to restrict the scope of protection defined by the claims.

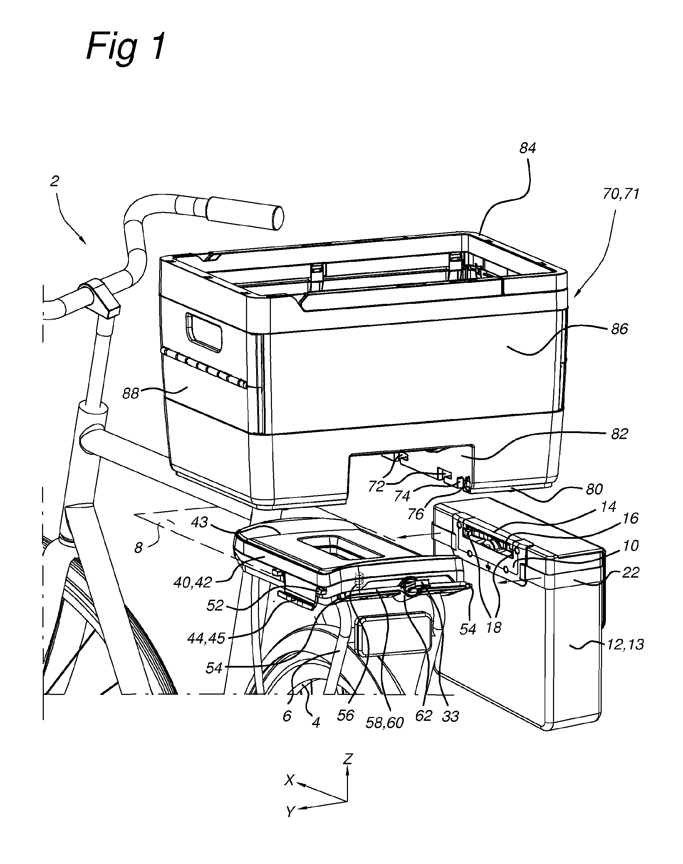

Fig. 1 shows a bicycle 2 with a luggage carrier 6 mounted above a rear wheel 4 of the bicycle 2. The luggage carrier 6 spans a horizontal plane 8. On the luggage carrier 6 is fastened a connecting element 40. The connecting element 40 is provided with a base 42 which is arranged for releasable fastening of an engaging element 10 with a holder 12, here shown as a panier 13, to a side of the base 42. The base 42 is also arranged for releasable fastening of a further holder 70, here shown as a folding box 71, on top of the base 42. In figure 1 the panier 13 and the folding box 71 are shown decoupled from the connecting element 40 such that the side and the top of the base 42 are visible, and a carrying surface 43 is shown suitable for supporting persons or objects is shown. A longitudinal side of the connecting element 40 defines a length direction X. Furthermore a width direction Y is defined in the horizontal plane 8 and transverse to the length direction X, and a height direction Z is defined perpendicular to the length direction X and width direction Y.

The connecting element 40 can be fastened for example to the luggage carrier 6 by means of four or more inverted U-bolts (not shown) which are fastened upward in the height direction Z around the frame bars and/or frame tubes of the luggage carrier 6 using nuts. Each U-bolt can be adjusted in the horizontal plane 8 in relation to the connecting element 40, resulting in arrangability of the fastening to luggage carriers 6 of various dimensions and bar/tube thicknesses.

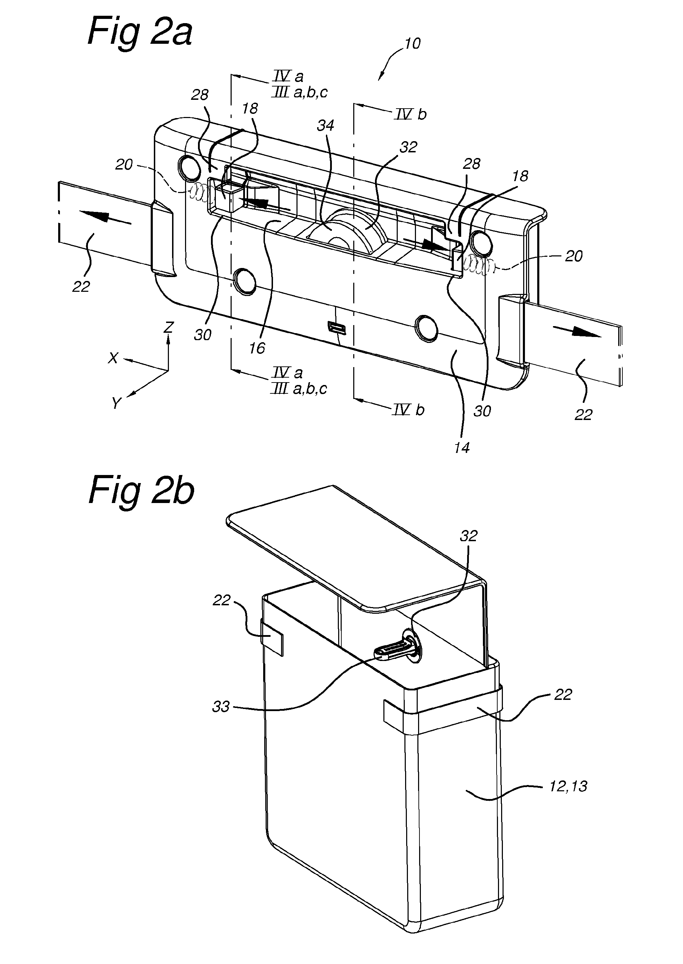

In the embodiment shown here the base 42 on the longitudinal sides has complementary engaging elements 44 in the shape of two ledges or fastening ribs 45 which are each formed cooperating with the engaging element 10 on a side of the panier 13, such that when fastened to the longitudinal side of the base 42, the panier 13 is immovable in the length direction X in relation to the base 42. For this the engaging element 10 is provided with a space 16 which has around the same length as the ledge 45 and in which the ledge 45 can be received. Each engaging element 10 has two locking bodies 18 for engaging on the ledge 45. These locking bodies 18 are movable between a released position in which the panier 13 is movable in relation to the base 42 in the width direction Y (possibly preceded by a linear movement of the panier 13 in the height direction Z), and a locked position in which the locking bodies 18 grip on the ledge 45 so that the panier 13 is linearly immovable in the width direction Y in relation to the base 42. The engaging element 10 is provided with two connecting straps 22 which are fastened along a part of a periphery of the panier 13 and are coupled with the locking bodies 18 to control the movement thereof in the length direction X in relation to the main part 14. The panier 13 and the engaging element 10 are described in more detail with reference to figures 2 to 4.

The folding box 71 is arranged for fastening on top of the base 42 of the connecting element 40 on the bicycle luggage carrier 6. The folding box 71 shown is provided with a lower centre of gravity in relation to the bicycle luggage carrier 6, which benefits stability during use. For this the folding box 71 has a groove 82 in the middle of an underside 80, the groove having a shape complementary to and intended to receive the connecting element 40, wherein the further engaging elements 72 and holder recesses 74 are mounted at the inner sides. The two holder recesses 74 are each provided with a height guide or vertical notch which transforms into a length guide or horizontal notch. At the end of the length guide, the recess 74 has a vertical stop surface 76. The further engaging elements 72 are formed as four L-shaped recesses comprising further length guides and further height guides. The folding box 71 shown is provided with an extendable handle 84 which can be swivelled from a side edge and when opened stands inclined in the height direction Z. The foldability of the folding box 71 is achieved by two opposing, inwardly hinging, collapsible panels 86 and two opposing, inwardly hinging, folding panels 88. Furthermore the folding box 71 is provided with four small wheels (not shown) on the underside 80 which wheels are partly recessed into the underside 80.

As shown in figure 1, the base 42 on longitudinal sides oriented in the length direction X is provided with four further complementary engaging elements 52 which connect to the L-shaped further engaging elements 72 on the underside 80 of the folding box 71. The further complementary engaging elements 52 are formed as four rectangular protrusions, oriented along the length direction X and pointing outward in the width direction Y, on the base 42. Furthermore the base 42 is provided with two further locking bodies 54 which fit in the holder recesses 74 on the underside 80 of the folding box 71.

In the connecting element 40 shown, the further locking bodies 54 lie on the longitudinal sides of the connecting element 40 and protrude in width direction Y. The shapes of the further engaging elements 72 and the holder recesses 74 are such that the folding box 71 can be moved on the base 42 via a vertical movement over the further complementary engaging elements 52 and the further locking bodies 54. By a horizontal movement of the folding box 71 in the length direction X and over the horizontal plane 8 of the base 42, at the same time the further locking bodies 54 slide through the length guides of the holder recesses 74, and the further complementary engaging elements 52 slide through the further length guides of the further engaging element 72. As a result the folding box, when fastened to the top of the base 42, is movable only in the length direction X in relation to the base 42.

The further locking bodies 54 are movable in the height direction Z between a further released position and a further locked position, wherein in the embodiment in figure 1 the further locking bodies 54 are higher in relation to the base 42 in the further locked position than in the further released position. If the folding box 71 is provided on the base 42 of the connecting element 40, the further locking bodies 54 positioned in the (lower) further released position will lie freely within the length guides of the holder recesses 74. As a result the further holder 70 remains freely movable in the length direction X in relation to the base 42. In contrast the further locking bodies 54 in the (higher) further locked position will lie against the vertical stop surfaces 76 in the holder recesses 74. Thus the further locking bodies 54 are fastened in the length direction X, so that the folding box 71 is held immovable in the length direction X in relation to the base 42. This cooperation between the further locking bodies 54 and the holder recesses 74 forms a so-called bi-stable mechanism for fastening the folding box 71 on top of the connecting element 40. Furthermore, at the backside of the connecting element 40 is mounted a control mechanism 58 for a user to manually change the position of the further locking bodies 54. This control mechanism 58 is provided with a control body 60 in the shape of a flattened ledge part which points obliquely backward and upward with a further locking mechanism 62 in the middle. The obliquely directed control body 60 is movable in relation to the base 42 and is connected with the further bodies 54. By a vertical movement of the control body 60 in relation to the base 42, for example by manual operation, the further locking bodies 54 can be moved from the further locked position to the lower further released position and possibly back again. To facilitate the return movement to the further locked position, the connecting element 40 is provided with a further spring mechanism 56 which connects the base 42 and the control body 60 together in a resilient manner. The position of equilibrium for the further spring mechanism 56 is such that the control body 60 and the further locking bodies 54 connected therewith are forced into the further locked position unless a substantial downward force (in the negative height direction Z) acts on the control body 60. In the absence of a sufficient downward force (i.e. at rest), the control body 60 is therefore in the upper further locked position.

Furthermore, the further locking bodies 54 can be extended in the width direction Y into a further secured position in the further locked position. When the further holder 70 is fastened to the connecting element 40, the further locking bodies 54 in this further secured position can engage in depressions which are made in the holder recesses 74 at the site of the stop surfaces 76. In the further secured position the further locking bodies 54 also engage on the base 42 so that the control body 60 is fastened in relation to the base 42. Movement of the further locking bodies 54 between the further locked position and the further released position is thus blocked and a rigid connection is realised between holder 70 and base 42. The control body 60 is immovable as long as the control body 60 and the further locking bodies 54 are fastened in the further secured position, even if a downward force is exerted on the control body 60. In the embodiment shown, fastening of the control body 60 and the further locking bodies 54 is realised by the further locking mechanism 62 in the middle of the backside of the control body 60. The further locking mechanism 62 is shown here with an insertable key 33 for operation of the further locking mechanism 62, such that by rotation of the key 33 the further locking bodies 54 are fastened in the further released position, the further locked position and/or the further secured position. The length guide in the holder recess 74 of the folding box 71 has a first profile for forcing the further locking bodies 54 towards the further released position if the fastened folding box 71 is moved in the length direction X in relation to the base 42. In addition the length guide has a second profile for forcing the further locking bodies 54 towards the further locked position if the fastened folding box 71 is moved in the length direction X or an opposing length direction -X in relation to the base 42. The first and/or second profiles ensure the desired status change in the bi-stable fastening mechanism of the connecting element 40.

Fig. 2a shows an engaging element 10 and Fig. 2b a panier 13 which on the top outside is provided with such an engaging element 10. The engaging element 10 consists of a main part 14 with a rectangular space 16 therein in which the ledge 45 (not shown) can be received. The two locking bodies 18 of the engaging element 10 are located at length ends 30 of the receiver space 16 and via a linear sliding movement in the length direction X are movable between the released position and the locked position. In the locked position each of the locking bodies 18 lies against a stop surface on an underside of the ledge 45. Each locking body 18 is provided with a spring mechanism 20 which exerts a force along the length direction X on the locking body 18 so that this is forced into the locked position. The fastening straps 22 are connected with the locking bodies 18 in such a way that opposite, outwardly directed forces exerted along the length direction X force the locking bodies 18 apart into the released position. In the released position the locking bodies 18 no longer engage on the ledge 45, and the fastened panier 13 can easily be removed from the base 42 with a movement in the width direction Y, possibly preceded by an upward movement.

The engaging element 10 is provided with a locking mechanism 32, here shown as a lock with a cam profile 34, which is arranged in the middle part of the receiver space 16 and can be operated using the key 33. The locking mechanism 32 has a locking edge 34 which can be rotated inside the receiver space 16 into a secured position in which the locking edge 34 encloses the ledge 45 in the receiver space 16.

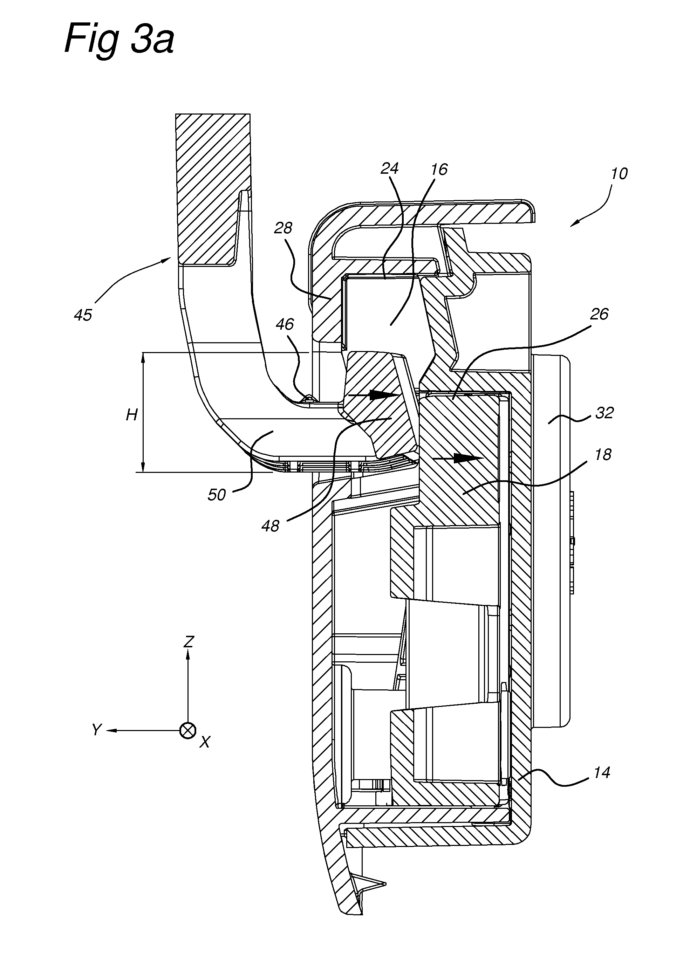

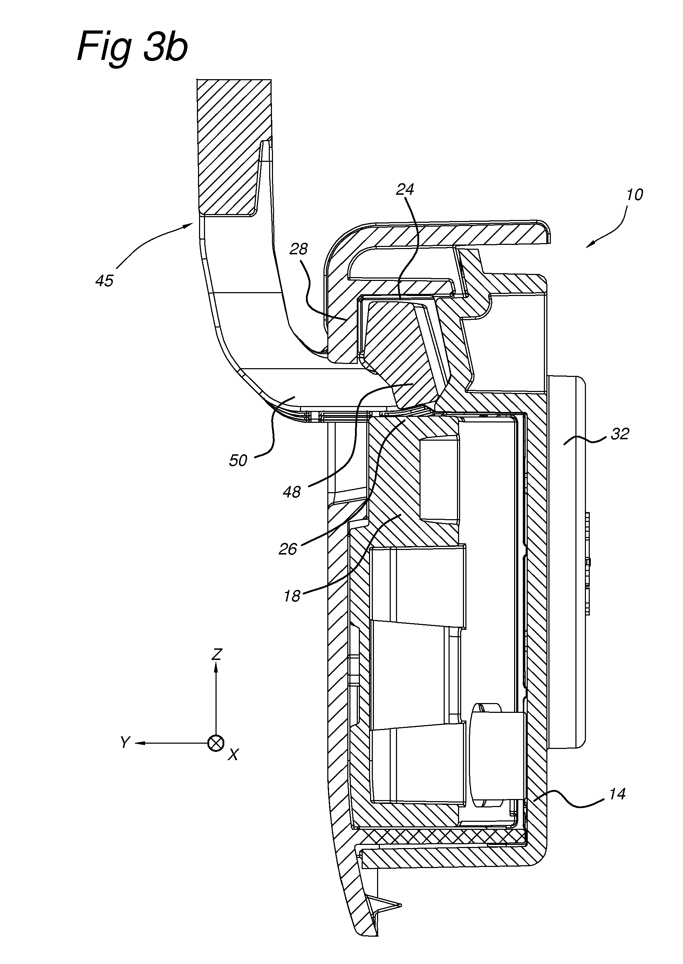

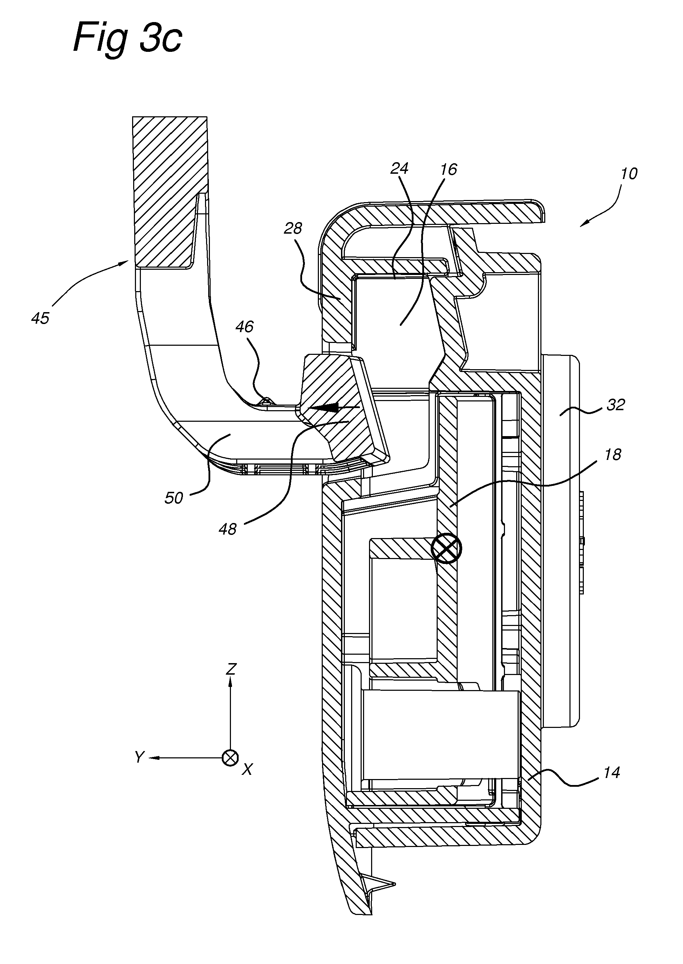

Figs. 3 - 4 illustrate the function of the engaging element 10 in more detail. Fig. 3a shows the ledge 45 which forms part of the base 42. The ledge 45 has a support edge 46 which transforms into an upright edge 48 erect along the height direction Z. The support edge 46 is located along the length direction X and has hinge recesses 50 at two length ends of the ledge 45. The receiver space 16 in the engaging element 10 has a shape which is complementary to the shape of the ledge 45. In particular the border between the receiver space 16 and the main part 14 forms a support region 24 with which the engaging element 10 in the fastened position rests on the top of the (upright edge 48 of the) ledge 45. On a top side, each locking body 18 has a stop region 26 with which the upright edge 48 of the ledge 45 can be clamped on the underside.

According to the embodiment in Figs. 3a - 3c, the ledge 45 is provided with an upright edge 48 pointing upward along the height direction Z, and offers a hinge recess 50 in which the downwardly protruding part 28 of the engaging element 10 fits. In the released position the engaging element 10, on decoupling of the base 42, is first tilted along the height direction Z to counter the engagement of the downwardly protruding part 28 and upright edge 48. Furthermore the hinge recess 50 and the protruding part 28 are formed such that the panier 13 can perform a limited rotation movement oriented in the height direction Z around an virtual rotation axis oriented along the length direction X, through a limited angle of for example 45°, even when the locking bodies 18 are in the locked position. Thus during use of the cycle, the fastened panier 13 retains a limited freedom of rotational movement in relation to the connecting element 40, which can be useful when the bicycle 2 is leaning. Displacement of the panier 13 with the engaging element 10 is possible in the width direction Y only remains impossible in relation to the base 42 in the locked position.

Fig. 3a shows that the locking bodies 18 are also movable in the transverse direction Y in relation to the main part 14 such that during movement of the engaging element 10 on the base 42, each locking body 18 can be displaced temporarily in the transverse direction Y as soon as the upright edge 48 is pressed into the receiver space 16 and against the locking bodies 18, as indicated by the arrows in Fig. 3a.

In Fig. 3b the locking body 18 has sprung back in the transverse direction Y to the locked position. The distance between the support region 24 and the stop region 26 is almost equal to the height H of the upright edge 48, so that in the locked position the upright edge 48 is held inside the receiver space 16, enclosed by the support region 24, the stop region 26, the downwardly protruding part 28 and a rear wall of the main part 14.

Fig. 3c shows the same cross section as in figs. 3a and 3b but here the locking body 18 has been moved along length direction X (in fig. 3c towards the page), for example by the exertion of force on the connecting strap 22, so that the stop region 26 no longer clamps the upright edge 48 at the underside. The engaging element 10 can therefore be removed from the ledge 45 first by a movement in the height direction Z (to prevent contact between the upright edge 48 and the protruding part 28) followed by a movement along the transverse direction Y.

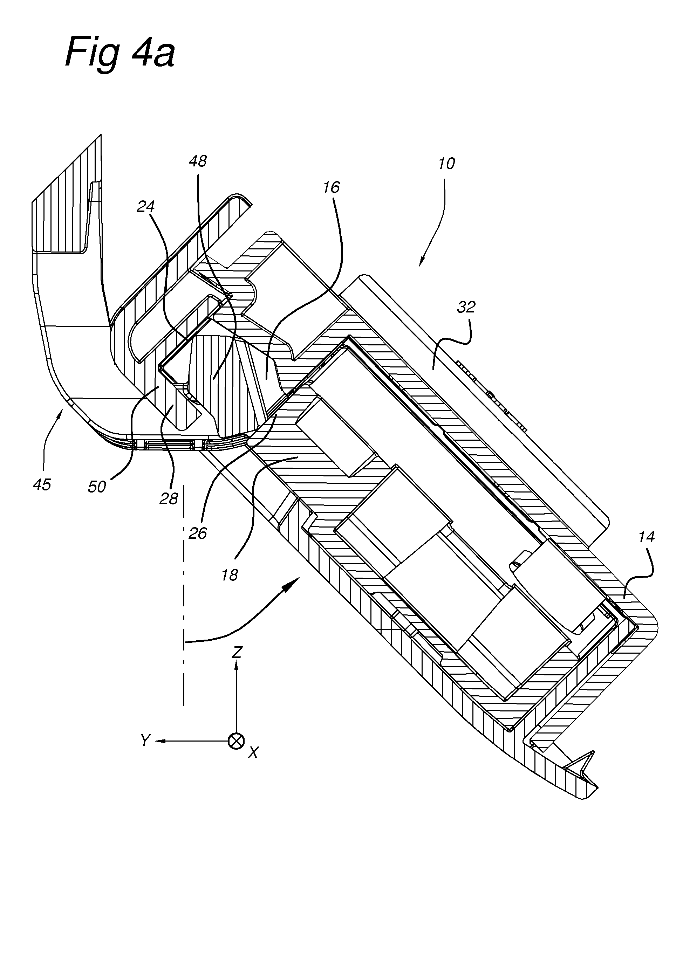

Fig. 4a shows the engaging element 10 in a rotated orientation in relation to the ledge 45. As positiond, the support edge 46 of the ledge 45 has the hinge recess 50 for receiving the downwardly protruding part 28 of the engaging element 10. In the fastened position of the engaging element 10, the hinge recess 50 in the support edge 46 and the downwardly protruding part 28 on the top of the receiver space 16 engage each other so that the engaging element 10 even in the locked position has a limited rotatability in relation to the ledge 45. To reduce the rotational resistance, the upright edge 48 has a sloping surface close to the stop region 26 of the locking body 18.

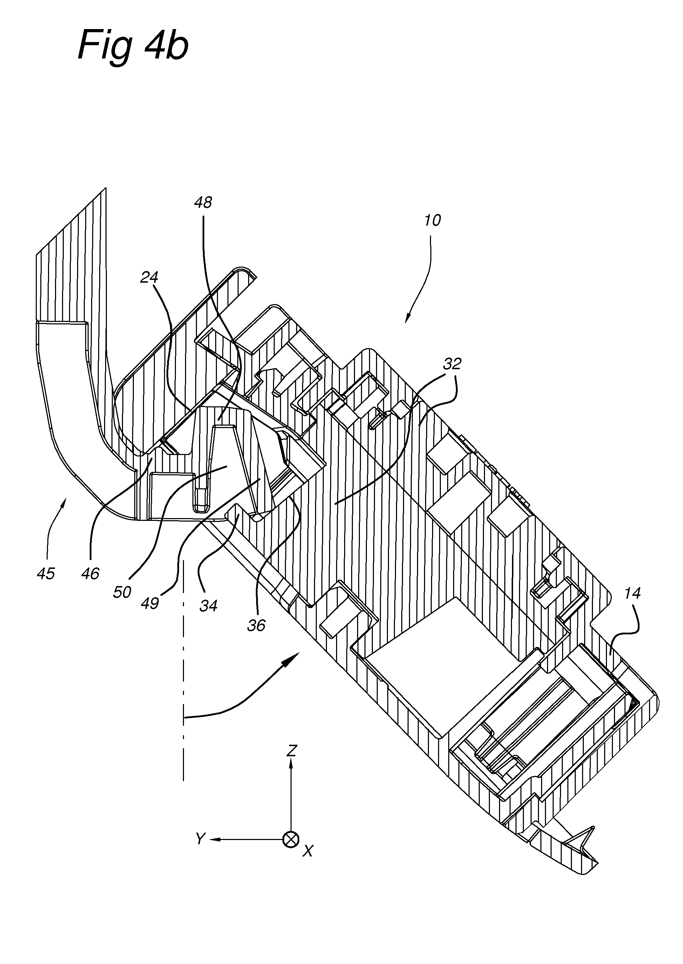

Fig. 4b shows the engaging element 10 in the same rotated orientation in relation to the ledge 45 but now in a cross section close to the middle of the receiver space 16. In this middle part, the engaging element 10 has a locking mechanism 32 with an upright locking edge 34 which can be rotated into the receiver space 16 into a so-called secured position in which the upright locking edge 34 encloses the upright edge 48 of the ledge 45 in the receiver space 16. The upright edge 48 of the ledge 45 in figure 4b has a cavity 50 on the underside which cavity is limited at an outside of the upright edge 48 by a downwardly protruding edge part 49. In the secured position the upright locking edge 34 imposes a limitation on the rotation range of the engaging element 10 because the upright locking edge 34, from a specific rotation angle, will touch the downward edge part 49 of the ledge 45. Any upward movement along height direction Z of the rotated engaging element 10 in the secured position is prevented by providing a flat lock stop region 36 on a top side of the locking mechanism 32. As shown in figure 4b, this lock stop region 36, in the secured position and with the engaging element 10 rotated almost to the maximum, joins a lower edge of the downward edge part 49 of the ledge 45.

Depending on the proposed weights and desired strength of the connecting element 40, engaging elements 10, holders 12 and further holders 70 (wherein the strength is primarily of importance for the load-bearing capacity of the ledge 45 and the robustness of the locking mechanisms 36, 62), the components described above can be made from known plastics, metals, composites and/or other construction materials.

According to embodiments not shown, the connecting element 40 alone can be provided with the lateral complementary engaging elements 44 on which holders 12 with engaging elements 10 can be mounted, without the base 42 being provided with further complementary engaging elements 52 for connecting the further holder 70 on top of the connecting element 40.

Furthermore according to alternative embodiments not shown, the base 42 of the connecting element 40 can be fastened in the substantially horizontal plane 8, for example above one of the wheels of the bicycle 2. This can be the rear wheel 4 or a front wheel, wherein the presence of the bicycle luggage carrier 6 (above the front or rear wheel) is not essential. Instead the connecting element 40 with the engaging elements 52 can be provided with a specially made connecting piece for fastening the base 42 to an axle and/or a frame of the bicycle 2. Alternatively the connecting element 40 can also be fastened permanently to the bicycle 2, for example by means of a bolt or weld connection.

It will be clear that the embodiments described above are described merely by way of example and have no limiting significance, and that various modifications and arrangations are possible without leaving the scope of the invention, and that the scope is determined solely by the enclosed claims.

### List of Reference Numerals

- 2: Cycle
- 4: Rear wheel
- 6: Luggage carrier
- 8: Horizontal plane
- 10: Engaging element
- 12: Holder
- 13: Panier
- 14: Main part
- 16: Receiver space
- 18: Locking body
- 20: Spring mechanism
- 22: Connecting strap
- 24: Support region
- 26: Stop region
- 28: Protruding part
- 30: Length end
- 32: Locking mechanism
- 33: Key
- 34: Upright locking edge
- 36: Lock stop region
- 40: Connecting element
- 42: Base
- 43: Carrying surface
- 44: Complementary engaging element
- 45: Ledge
- 46: Support edge
- 48: Upright edge
- 49: Downward edge part
- 50: Hinge recess
- 51: Cavity
- 52: Further complementary engaging element
- 54: Further locking body
- 56: Further spring mechanism
- 58: Control mechanism
- 60: Control body
- 62: Further locking mechanism
- 70: Further holder
- 71: Folding box
- 72: Further engaging element
- 74: Holder recess
- 76: Stop surface
- 80: Underside
- 82: Groove
- 84: Handle
- 86: Collapsible panel
- 88: Folding panel
- H: Ledge height
- X: Length direction
- Y: Width direction
- Z: Height direction

## Claims

1. Engaging element (10) for a holder (12) arranged for fastening to a longitudinal side of a substantially horizontal plane (8) of a cycle (2), for example to a bicycle luggage carrier (6), **characterised in that** the engaging element (10) comprises a main part (14) with a receiver space (16) for a ledge (45) along a length direction X of a base (42) in the horizontal plane (8), and that the engaging element (10) comprises two locking bodies (18) which are linearly movable in relation to the main part (14) and opposite to each other in the length direction X and which can be operated along sides of the engaging element (10) between a locked position in which the engaging element (10) fastened to the base (42) is linearly immovable at least in a transverse direction Y in relation to the base (42) and a released position in which the fastened engaging element (10) is linearly movable in relation to the base (42).

2. Engaging element (10) according to Claim 1, wherein the locking bodies (18) are provided with spring mechanisms (20) for forcing the locking bodies (18) into the locked position.

3. Engaging element (10) according to any of the preceding claims, provided with a connecting strap (22) for fastening along at least one peripheral part of the holder (12), wherein the connecting strap (22) is coupled with the locking body (18) and is arranged to move the locking body (18) in the length direction X in relation to the main part (14).

4. Engaging element (10) according to any of the preceding claims, wherein the locking body (18) is movable in a transverse direction Y in relation to the main part (14) when fastening the engaging element (10) to the base (42).

5. Engaging element (10) according to any of the preceding claims, wherein the receiver space (16) on a topside is provided with a support region (24) for supporting the engaging element (10) on a support edge (46) of the ledge (45), wherein the locking bodies (18) are located on the underside of the receiver space (16) and are each provided with a stop region (26) which lies one ledge height (H) lower than the support region (24) and is arranged to engage an underside of the ledge (45), preferably the receiver space (16) on the topside is provided with a downwardly protruding part (28) for engaging on a hinge recess (50) along the length direction X and in the support edge (46) of the connecting element (40).

6. Engaging element (10) according to any of the preceding claims, provided with a locking mechanism (32) with an upright locking edge (34) for enclosing a downwardly protruding edge part (49) of the ledge (45) in the receiver space (16) in a secured position.

7. Holder (12) provided with an engaging element (10) according to any of the preceding claims.

8. Connecting element (40) comprising complementary engaging elements (44), each of which is formed cooperating with an engaging element (10) on a holder (12) such that the holder (12) can be fastened at a side of a cycle (2), **characterised in that** the connecting element (40) comprises a base (42) which can be fastened in a substantially horizontal plane (8) of the cycle (2), for example above the wheel (4) and in particular on a bicycle luggage carrier (6), wherein the complementary engaging elements (44) are formed as ledges (45) extending along a length direction X and mounted on two longitudinal sides of the base (42).

9. Connecting element (40) according to Claim 8, wherein the base (42) comprises further complementary engaging elements (52) which are formed cooperating with further engaging elements (72) of a further holder (70) such that the further holder (70) can be fastened on top of the base (42), wherein the base (42) comprises at least two further locking bodies (54) for engaging on at least two holder recesses (74) with a stop surface (76) in the further holder (70), wherein the further locking bodies (54) are movable between a further released position in which the further holder (70) is movable in the length direction X in relation to the base (42) and a further locked position in which each further locking body (54) touches the stop surface (76) and the further holder (70) is immovable in relation to the base (42).

10. Connecting element (40) according to any of Claims 8 or 9, provided with a further spring mechanism (56) for forcing the further locking bodies (54) into the further locked position.

11. Connecting element (40) according to any of Claims 8 - 10, provided with a control mechanism (58) with a control body (60) which is mounted movable in relation to the base (42) and arranged for moving the further locking bodies (54) into the further released position, wherein preferably the control mechanism (58) is provided with a further locking mechanism (62) for fastening the further locking bodies (54) in at least one of the further released position, the further locked position and the further secured position.

12. Connecting element (40) according to any of Claims 8 - 11, wherein the further locking bodies (54) in the further locked position can be extended in the width direction Y up to a further secured position, such that the further locking bodies (54) engage in depressions in the holder recesses (74) if fastened on top of the base (42), wherein preferably the control mechanism (58) is provided with a further locking mechanism (62) for fastening the further locking bodies (54) in at least one of the further released position, the further locked position and the further secured position.

13. Assembly of a connecting element (40) according to any of Claims 8 - 12 and an engaging element (10) according to any of Claims 1 - 6 and/or a holder (12) according to Claim 7.

14. Assembly according to Claim 13, comprising a further holder (70) arranged for fastening on top of the base (42) which can be fastened in the horizontal plane (8) above the wheel (4), wherein the further holder (70) comprises further engaging elements (72) which are formed cooperating with further complementary engaging elements (52) on the base (42), wherein the further holder (70) comprises at least two holder recesses (74) with a stop surface (76) for engaging on the two further locking bodies (54), such that the further holder (70) is movable in the length direction X in relation to the base (42) and such that each further locking body (54) in the further locked position touches the stop surface (76) and the further holder (70) is immovable in relation to the base (42).

15. Cycle (2) provided with a connecting element (40) according to any of Claims 8 - 12 or provided with an assembly according to any of Claims 13 or 14.
